# EUROPEAN PATENT SPECIFICATION

(11) **EP 1 887 385 B1**
(45) Date of publication and mention of the grant of the patent: **11.11.2009**
(21) Application number: 06118704.3
(22) Date of filing: 10.08.2006
(51) Int. Cl.: G01T 1/29

(54) **Method of erasing storage phosphor panels**
Verfahren zum Löschen von Speicherleuchtstoffträgern
Procédé d'effacement de panneaux de stockage phosphorescents

(43) Date of publication of application: 13.02.2008
(73) Proprietor: Agfa HealthCare NV, 2640 Mortsel (BE)
(72) Inventor: Struye, Luc, B-2640 Mortsel (BE)
(74) Representative: Linsmeier, Josef

(56) References cited:
- EP-A1- 0 056 599
- GB-A- 2 055 526
- US-A- 4 608 190
- US-A- 6 140 663
- US-A1- 2005 017 207
- US-B1- 6 504 169

## Description

### FIELD OF THE INVENTION

The present invention is related with computed radiography systems making use of storage phosphor screens or panels in order to record X-ray images and more particularly to a technique for erasing a storage phosphor in said plate in order to ensure repeated use thereof.

### BACKGROUND OF THE INVENTION

A well-known use of phosphors is in the production of X-ray images. In a conventional radiographic system an X-ray radiograph is obtained by X-rays transmitted image-wise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

According to another method of recording and reproducing an X-ray pattern as disclosed e.g. in US-A 3,859,527 a special type of phosphor is used, known as a photostimulable phosphor, which being incorporated in a panel, is exposed to an incident pattern-wise modulated X-ray beam and as a result thereof temporarily stores energy contained in the X-ray radiation pattern. At some interval after exposure, a beam of visible or infra-red light scans the panel to stimulate the release of stored energy as light that is detected and converted to sequential electrical signals which can be processed to produce a visible image. For this purpose, the phosphor should store as much as possible of the incident X-ray energy and emit as little as possible of the stored energy until stimulated by the scanning beam. Upon stimulation with relatively long wavelength stimulating radiation such as red or infrared light produced e.g. by a helium neon gas laser or diode laser, the storage phosphor thus releases emitted radiation of an intermediate wavelength, such as blue light, in proportion to the quantity of x-rays that were received. In order to produce a signal useful in electronic image processing the storage phosphor is scanned in a raster pattern by a laser beam deflected by an oscillating or rotating scanning mirror or hologon or is scanned with a linear array of e.g. LED's. The emitted radiation from the storage phosphor is reflected by a mirror light collector or guided by means of fiber optics in order to become detected by a photodetector such as a photomultiplier in order to produce an electronic image signal. Typically the storage phosphor is translated in a page scan direction past the laser beam which is repeatedly deflected in a line scan direction perpendicular to the page scan motion of the storage phosphor to form a scanning raster patter of a matrix of pixels. This imaging technique is called "digital radiography" or "computed radiography".

The storage phosphor is then erased so that it can be reused again. Successful erasure techniques in order to remove any residual image and any background image noise have been described in following patents and patent applications.

US-A 4,496,838, discloses a noise erasing apparatus for a stimulable phosphor sheet having an erasing source of light having a wavelength range of 400 nm to 600 nm. The light source can be a fluorescent lamp, a laser source, a sodium lamp, a neon lamp, a metal halide lamp or an Xenon lamp.

US-A 4,439,682 discloses a noise erasing method including sequential first and second erasings. The first erasing is conducted in order to erase the radiation image previously stored in the storage phosphor, while the second erasing is carried out just before the phosphor is used again, in order to erase fog which develops after the first erasing.

US-A's 5,065,021; 5,422,208 and 5,550,386 disclose a method of erasing a stimulable phosphor sheet comprising the steps of exposing the stimulable phosphor sheet to first erasing light containing therein light having wavelengths within the ultraviolet range and then exposing the same to second erasing light having wavelengths longer than the ultraviolet range.

US-A 5,665,976 discloses a storage phosphor erasing method including sequential exposure to a first erasing light which contains no light component of a wavelength range which can be detected by photoelectric readout means, as the storage phosphor is fed away from a read-out section and to a second erasing light which contains a light component in the wavelength range which can be detected by the photoelectric readout means, as the storage phosphor is fed back to the readout section.

US-A 5,371,377 discloses a method of storage phosphor erase using light in the wavelength range of 370 nm to 530 nm range, containing two separate emission bands, one peaking at or near 400 nm (ultraviolet) and the other at or near 500 nm (blue/green).

US-A 6,140,663 discloses a storage phosphor erase method using a first radiation source having a wavelength of 577 to 597 nm while preventing ultraviolet light wherein the source includes a yellow light emitting diode, and a second radiation source having wavelengths including at least one of infrared or near infrared.

EP-A's 0 136 588 and 0 182 095 disclose a storage phosphor erase source including a light emitting diode emitting light in the wavelength range of 728-850 nm.

Most of the phosphors in a screen or panel to become erased are photostimulable phosphors of the alkaline earth metal fluoro halide type, mainly doped with europium.

In the meantime CsBr doped with divalent Eu has been shown to be a promising X-ray storage phosphor which can be grown in form of needle-shaped crystals. In basic patent US-A 6,802,991 a specific method is offered for producing such a phosphor by vapor deposition in a vapor deposition apparatus by heating a mixture of CsBr with an Europium compound selected from the group consisting of e.g. EuBr₂, EuBr₃ and EuOBr, by heating said mixture at a temperature above 450°C, and depositing said phosphor on a substrate by a method selected from the group consisting of physical vapor deposition, chemical vapor deposition or an atomization technique. In US-A 6,730,243 a method for preparing a CsBr:Eu phosphor comprises the steps of mixing or combining CsBr with between 10⁻³ mol % and 5 mol % of a europium compound wherein said europium compound is a member selected from the group consisting of EuBr₂, EuBr₃ and EuOBr, vapor depositing that mixture onto a substrate, forming a binderless phosphor screen, cooling said phosphor screen to room temperature, bringing said phosphor screen to a temperature between 80 and 220°C and maintaining it at that temperature for between 10 minutes and 15 hours, i.e. an annealing step is added in order to further correct, i.e. increase phosphor speed. As taught in EP-A 1 443 525 further corrections can be made by a radiation exposure treatment during or after at least one of the preparation steps with energy from radiation sources emitting short ultraviolet radiation in the range from 150 nm to 300 nm with an energy of at least 10 mJ/mm².

Erasure techniques in order to erase storage phosphor screens or panels coated with a binderless needle-shaped vapour deposited CsBr:Eu phosphor after use have been described in US-A's 6,504,169; 6,528,812 and 6,512,240.

So in US-A 6,504,169 a method of reading has been described of a radiation image that has been stored in a photostimulable phosphor screen having a surface area that is not greater than Sₘₐₓ comprising the steps of (1) stimulating said phosphor screen by means of stimulating radiation, (2) detecting light emitted by the phosphor screen upon stimulation and converting the detected light into a signal representation of said radiation image, (3) erasing said phosphor screen by exposing it to erasing light, wherein (4) said photostimulable phosphor screen comprises a divalent europium activated cesium halide phosphor and wherein (5) said erasing light is emitted by an erasing light source assembly emitting in the wavelength range of 300 nm to 1500 nm and having an electrical erasing energy not greater than Sₘₐₓ x 1 J, and wherein said wavelength is in the range between 500 nm and 800 nm.

In US-A 6,528,812 a re-usable radiation detector has been described, comprising a photostimulable phosphor screen, at least one source of stimulating light arranged for stimulating said phosphor screen, an array of transducer elements arranged for capturing light emitted by the phosphor screen upon stimulation and for converting said light into an electrical signal representation, an erasing unit comprising an electroluminescent lamp arranged in order to illuminate said phosphor screen when being energised, means for transporting an assembly comprising the at least one stimulating light source, the erasing unit, and the array of transducer elements relative to the phosphor screen, an enclosure enclosing said photostimulable phosphor screen, the assembly comprising the at least one stimulating light source, the erasing unit, and the array of transducer elements, and the means for transporting said assembly, interfacing means for communicating said electrical signal representation to an external signal processing device. Said electroluminescent lamp is based therein on an inorganic or organic electroluminescent phosphor.

In US-A 6,512,240 a method of reading a radiation image that has been stored in a photostimulable phosphor screen comprises the steps of (1) stimulating said phosphor screen by means of stimulating radiation emitted by a stimulating light source, (2) detecting light emitted by the phosphor screen upon stimulation and converting the detected light into a signal representation of said radiation image, (3) erasing said phosphor screen by exposing it to erasing light, wherein (4) said photostimulable phosphor screen comprises a divalent europium activated cesium halide phosphor and wherein (5) said erasing light is emitted by an erasing light source assembly comprising at least one laser. It has further been claimed therein that said stimulating light source is the same light source as said erasing light source.

GB-A-2 055 526 discloses a phosphor screen exhibiting so-called induced polarization, wherein the phospohor is selectively polarized upon irradiation with x-rays and a polarization pattern stored in the phospohor screen is read out by scanning a light source, in particular a Green-Blue Argon laser, over the surface and measuring a discharge current. In order to remove a so-called dark polarization existing even in areas of the screen that received little x-radiation, the surface is exposed to infra-red radiation prior to being scanned.

The stimulation spectrum of a CsBr:Eu phosphor, showing the possible wavelengths, suitable for use in order to stimulate the phosphor is known to show only one peak in the spectrum in the range from 550 nm to 850 nm with a maximum at 700 nm. Hitherto only these wavelengths have been used so far that provide ability to stimulate this type of phosphor. It has further been established that the stored energy is also thermally stimulable at room temperature and that thereby the phosphor is weakly emitting radiation, even when it has not been stimulated with light. The light emitted as a consequence of thermal stimulation, however creates noise, so that the image quality gets worse. The more thermally stimulated emission, the stronger or more intense the "afterglow" and the more a negative influence on image quality is encountered.

Despite the fact that many techniques have become available for erasing a readout storage phosphor plate or panel, there is a need for an erasure technique allowing frequent reuse of said readout panel, without having a negative influence on image quality.

### SUMMARY OF THE INVENTION

It is an object of the present invention to provide a method for totally erasing a CsBr:Eu type binderless, needle-shaped photostimulable phosphor in a storage phosphor screen or panel in order to avoid any loss in image quality that might be caused by undesired emissions interacting with signals detected after readout of such a storage phosphor plate or panel.

It is a more particular object to reduce undesired afterglow of a readout CsBr:Eu type storage phosphor plates, which afterglow while performing readout causes noise and a lowering of its dynamic range, in order to get a better image quality, i.e. less noise, and a higher dynamic range.

The above-mentioned advantageous effects have been realized by providing a method for quantitatively erasing stored energy, resulting in undesired afterglow by application of specific steps in the erasure method as set out in claim 1. Specific features for preferred embodiments of the invention are set out in the dependent claims.

It has been found now that after having captured an X-ray image as a latent image stored in the deep energy traps of the phosphor crystals, exposing the image storage plate with infrared light erases shallow traps present, without influencing detection of the captured latent X-ray image after reading out said image with normally used stimulation light, i.e. light in the range from 550 nm to 850 nm with a maximum at 700 nm.

Particular embodiments in the erasure method of the storage phosphor panels according to the present invention are as follows.

It becomes clear that in method of the present invention the infrared light does not erase the deep traps building the image after stimulation.

By said "pre-erasure" that causes thermally stimulated light to become emitted before reading out the X-ray image, the amount of the said thermally stimulated emitted light is reduced by erasing shallow traps in the phosphor that are responsible for the undesired afterglow after exposure to stimulating light having a wavelength within the stimulation spectrum range from 550 nm to 850 nm.

In the stimulation spectrum of CsBr:Eu it has been found now that shallow traps in the infrared range of the stimulation spectrum show a peak at wavelengths of 1070 nm and of 1370 nm.

In the method of erasing energy stored in shallow traps in order to avoid afterglow occurring during readout of the X-ray image captured in the deep traps of CsBr:Eu storage phosphor panels, it is, according to the present invention, recommended to expose the image storage phosphor plate, after X-ray exposure, with infrared radiation, having a wavelength in the range from 1000 nm to 1550 nm.

In a more particular embodiment in the method of the present invention erasure by infrared radiation, having a wavelength in the range from 1030 nm to 1130 nm is preferred.

From all available infrared radiation sources, the Nd:YAG laser is most suited.

As an advantageous effect of the present invention, exposure of CsBr:Eu-type phosphors having been exposed to X-rays, before starting readout by stimulating light in the range from 550 nm to 850 nm, with sources emitting infrared radiation in the range from 1000 nm to 1550 nm, and more particularly in the range from 1030 nm to 1130 nm, results in a remarkable decrease of thermally stimulated radiation emitted in form of undesired afterglow. Moreover it advantageously results in a decrease of noise level of the detected and reproduced X-ray image and in a higher dynamic range of the resulting reproduced X-ray image.

Further advantages and particular embodiments of the present invention will become apparent from the following description.

### BRIEF DESCRIPTION OF THE DRAWING

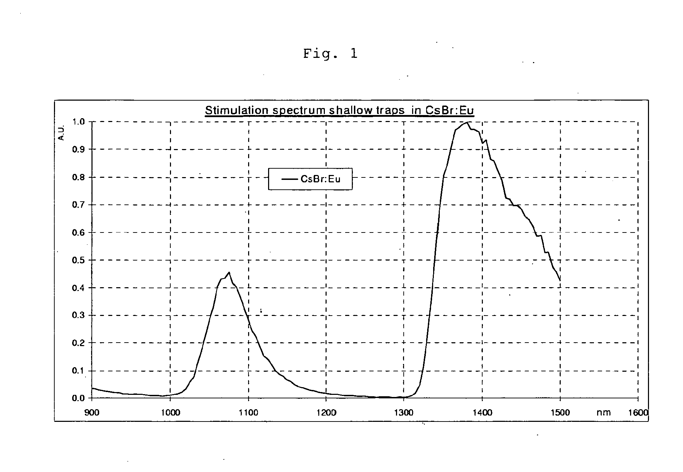

Figure 1 represents the stimulation spectrum of the shallow traps of a CsBr:Eu phosphor in a storage phosphor panel wherein intensities in the spectrum are given in arbitrary units (A.U.) as a function of stimulating wavelengths. Peak intensities of said stimulating wavelengths thus appear in the wavelength ranges 1050-1100 nm and 1350-1400 nm, representing ranges wherein stimulation in longer wavelength ranges is most effective.

### DETAILED DESCRIPTION OF THE INVENTION

According to the present invention a method is provided as outlined in claim 1.

In a more particular embodiment according to the method of the present invention the step of erasing thermally stimulable energy is performed by exposing said screen to infrared radiation in the wavelength range from 1030 nm to 1130 nm.

With respect to particular radiation emission sources suitable for use in the method of the present invention, the step of thermally stimulable energy stored in shallow traps of the phosphor crystals is performed by exposing said screen to infrared radiation by means of a Nd:YAG laser as a source of infrared radiation.

In another embodiment according to the method of the present invention, the step of thermally erasing stimulable energy by exposing said screen to infrared radiation is performed by means of a Nd:YLF laser as a source of infrared radiation.

In still another embodiment according to the method of the present invention, the step of thermally erasing stimulable energy is performed by exposing said screen to infrared radiation by means of a tungsten lamp with an optical filter as a source of infrared radiation.

In a still further embodiment according to the method of the present invention, the step of thermally erasing stimulable energy is performed by exposing said screen to infrared radiation by means of an infrared LED as a source of infrared radiation.

In another embodiment according to the method of the present invention, the step of thermally erasing stimulable energy is performed by exposing said screen to infrared radiation by means of a diode laser as a source of infrared radiation.

In a particular embodiment according to the method of the present invention a combination of consecutively erasing shallow traps, directly followed by readout of deep traps by scanning with one and the same laser is made available. Such a particularly suitable laser therefore e.g. is a Nd:YAG laser. So a first scanning with the said laser, while blocking stimulating blue light by a filter and allowing transmittance of radation of long wavelengths in the infrared wavelength range is advantageously followed by a direct scanning with the same laser, without a filter blocking the stimulating blue light now in order to allow stimulation of stored energy and to provide emission of energy, stored in deep energy traps, in order to provide representation of the radiation image of an X-ray exposed subject with less noise and a better image quality.

So in a device for reading information stored in a phosphor layer, as in US-A 6,369,402; a transparent carrier material including the CsBr:Eu phosphor layer is provided further with a radiation source for emitting excitation or stimulating radiation; a receiver for receiving emission radiation emitted by the phosphor layer, wherein the radiation source is arranged on one side of the carrier material and the receiver is arranged on the other side of the carrier material, so that an optical path is defined between the radiation source and the receiver and at least one thin reflective layer disposed in the optical path between the radiation source and the receiver for reflecting at least a portion of the stimulating excitation radiation away from said receiver. In such a device the reflective layer is arranged between the radiation source and the phosphor layer and designed to reflect a wavelength range of the excitation radiation which is not used to excite the phosphor layer. More particularly when, as in the present invention, it is advantageous to have two reflective layers, in that the first reflective layer is arranged between the phosphor layer and the receiver and in that the second reflective layer is arranged between the radiation source and the phosphor layer and designed to reflect a wavelength range of the stimulating radiation not used to excite the phosphor layer. The device advantageously is a construction wherein the carrier material and the phosphor layer have a fixed location in the device, wherein the radiation source is arranged on a side of the carrier material facing away from the phosphor layer and the receiver is arranged on a side of the carrier material facing towards the phosphor layer and where there is a straight optical path between the radiation source and receiver; and between the phosphor layer and receiver, wherein the receiver is provided with an optical imaging means capable of capturing the emission radiation emitted by the phosphor layer and imaging the emission radiation onto the receiver. The device is further provided with imaging means comprising optical waveguides. In such a device the radiation source is a line light source for exciting an individual row of the phosphor layer and the receiver, therefor comprising a plurality of pixels for point-by-point reception of the emission radiation and wherein the emission radiation emitted by the excited row of the phosphor layer can be simultaneously received by the pixels, so that the phosphor layer can be read row by row. In the present invention it is advantageous to first excite, row by row, the shallow traps in the phosphor, i.e. that in a first scanning, line per line, the blue laser light of the NdYAG laser is blocked and/or reflected while the long infrared wavelengths are erasing the shallow traps, whereas in a second scanning, whether or not almost immediately following the first scanning, the blue laser light is transmitted and is stimulating the deep traps generated by X-ray exposure and energy storage of the latent image, which should be readout in order to represent the image-wise X-ray exposed subject.

In another embodiment a tunable laser, providing ability to change its emitted wavelenght as desired, is used in order to provide readout by energy having an optimally chosen wavelength in the stimulation spectrum in order to get a stimulated emission signal as high as possible.

Whereas use of one and the same laser requires transport of the plate twice, thereby doubling the readout time, an alternative is offered by providing a readout system having two lasers, positioned adjacent to each other, so that the steps of erasure and readout immediately follow subsequently.

The described scan-head type differs from the conventional flying spot type in that in the scan-head type the image readout is line-wise whereas in the conventional flying spot type readout unit the reading is performed in a point-by-point fashion.

In such an arrangement, the first reflective layer is arranged between the imaging means and the receiver. In an example the radiation source and the receiver are connected to each other and the device further comprises a driver for providing a relative motion in a transport direction between the radiation source, the receiver and the phosphor layer. Further the device has a first reflective layer which is arranged between the imaging means and the receiver.

The device wherein the radiation source and the receiver are connected to each other further comprises a driver for providing a relative motion in a transport direction between the radiation source, the receiver and the phosphor layer.

In one embodiment the readout unit comprises a linear light source for emitting stimulating light onto the photostimulable phospor screen. This linear light source comprises 4096 individual laser diodes arranged in a row. This light source provides simultaneous illumination of all pixels of a single line of the photostimulable phosphor screen.

The readout unit further comprises a fiber optic plate for directing light emitted by the phosphor screen upon stimulation onto a linear array of sensor elements, i.e., more particulary charge coupled devices. The fiber optic plate comprises a number of mounted light guiding fibers arranged in parallel, in order to guide the light emitted by each individual element of an illuminated line onto a sensor element.

Alternatively the fiber optic plate can be replaced by an arrangement of selfoc lenses or microlenses. A light guide member might even be avoided.

In an example the array of stimulating light sources, the fiber optic plate and the sensor array are arranged at the same side of the photostimulable phosphor screen. After readout the photostimulable phosphor screen is erased so that the energy remaining in the screen after readout is released, so that the screen is in a condition for reuse.

In the type of readout apparatus wherein stimulation is performed by means of light emitted by a linear light source extending parallel to a scan line on the stimulable phosphor screen, the erasure unit preferably forms part of the readout unit.

An additional reflective layer for reflecting emission radiation emitted by the phosphor layer is arranged between the radiation source and the phosphor layer in order to reflect emission radiation back to the phosphor layer.

In the device the reflective layer advantageously has a thickness equal to one quarter of the wavelength of the excitation radiation which should be reflected by that reflective layer.

In one aspect according to the method of the present invention, while erasing, use is made of at least one laser.

In another aspect according to the method of the present invention, while erasing, use is made of one and the same laser for all of the erasing steps.

In a particular embodiment according to the method of the present invention, said laser is a tunable laser.

In a further particular embodiment according to the method of the present invention, the main wavelength of the said laser is mixed with one or more harmonics thereof, obtained by frequency doubling.

In the method according to the present invention, when use is made from said one and the same laser, use is made of a longer erasing wavelength in a first erasing step and a shorter erasing wavelength in a last erasing step.

Moreover according to the method of the present invention, while making use of said longer erasing wavelength in a first erasing step a filter is present in order to prevent transmission of said shorter erasing wavelength.

Further according to the method of the present invention, while making use of said shorter erasing wavelength in a last erasing step, no filter is present.

According to the method of the present invention, the stimulating light source is a linear array of laser diodes.
In another aspect according to the method of the present invention, an array of transducer elements converting the said detected light emitted upon stimulation into an electrical signal representation is a linear array of charge coupled device elements.

In the method according to the present invention, said CsBr:Eu phosphor is advantageously prepared by mixing CsBr as an alkali metal halide salt and wherein as a lanthanide dopant salt use is made of EuX₂, EuX₃, EuOX or EuX_{z}, wherein 2<z<3 and wherein X is one of Br, Cl or a combination thereof.

In another embodiment thereof, according to the present invention, said CsBr:Eu phosphor is advantageously prepared by mixing CsBr as an alkali metal halide salt and wherein between 10⁻³ and 5 mol % of a Europium compound selected from the group consisting of EuX₂, EuX₃, EuOX, or EuX_{z}, wherein 2<z<3 and wherein X is one of Br, Cl or a combination thereof, firing the mixture at a temperature above 450°C, cooling said mixture, and recovering the CsBr:Eu phosphor.

In still another embodiment thereof, according to the present invention, said CsBr:Eu phosphor is advantageously prepared by mixing CsBr as an alkali metal halide salt and a combination of an alkali metal halide salt and a lanthanide dopant salt according to the formula CsₓEu_{y}X'_{x+αy}, wherein x/y > 0.25, wherein α ≥ 2 and wherein X' is a halide selected from the group consisting of Cl, Br and I and combinations thereof.

According to the method of the present invention said CsBr:Eu phosphor screen is obtained by applying said phosphor on a substrate by a method selected from the group consisting of physical vapour deposition, thermal vapour deposition, chemical vapour deposition, radio frequency deposition and pulsed laser deposition.

An image-forming system making use of the methods of the present invention as described above is thus recommended in order to provide a better signal to noise representation of the desired image.

### Examples

CsBr:Eu photostimulable phosphor screens were prepared by a vapour deposition process, on flexible chromium sealed anodized aluminum plates, in a vacuum chamber by means of a resistive heating of crucibles, having as starting materials a mixture of CsBr and EuOBr as raw materials. Said deposition process onto said flexible anodised aluminum supports was performed in such a way that said support was rotating over the vapour stream.

An electrically heated oven and two refractory trays or boats - one placed on the left side, the other on the right side, were used, in which 330 g of a mixture of CsBr and EuOBr as raw materials in a 99.5%/0.5% CsBr/EuOBr percentage ratio by weight were present as raw materials in each of said crucibles in order to become vaporized. As crucibles an elongated boat having a length of 100 mm was used, having a width of 35 mm and a side wall height of 50 mm composed of "tantalum" having a thickness of 0.5 mm, composed of 3 integrated parts: a crucible container, a "second" plate with slits and small openings and a cover with slit outlet. The longitudinal parts were fold from one continuous tantalum base plate in order to overcome leakage and the head parts are welded. Said second plate was mounted internally in the crucible at a distance from the outermost cover plate which was less than 2/3 of said side wall height of 45 mm. Under vacuum pressure (a pressure of 2 x 10⁻¹ Pa equivalent with 2 x 10⁻³ mbar) maintained by a continuous inlet of argon gas into the vacuum chamber, and at a sufficiently high temperature of the vapour source (760°C) the obtained vapour was directed towards the moving sheet support and was deposited thereupon successively while said support was rotating over the vapour stream. Said temperature of the vapour source was measured by means of thermocouples present outside and pressed under the bottom of said crucible and by tantalum protected thermocouples present in the crucible. Before starting evaporation in the vapour deposition apparatus, while heating the raw mixture in the boat or crucible and to make them ready for evaporation, shutters are covering the boats, trays or crucibles.

The chromium sealed anodized aluminum support having a thickness of 800 µm, a width of 18 cm and a length of 24 cm, was covered with a parylene C precoat at the side whereupon the phosphor should be deposited, positioned at a distance - measured perpendicularly - of 22 cm between substrate and crucible vapour outlet slit.

Plates were taken out of the vapour deposition apparatus after having run same vapour deposition times, leading to phosphor plates having phosphor layers of about equal thicknesses.

In the Figure 1, peaks as provided by the stimulation spectrum of the CsBr:Eu storage phosphor panel can easily be detected.

A test showed that a Nd:YAG laser (1064 nm) and a diode laser (1300 nm and 1550 nm) were providing the best result with respect to erasure, preference to be given to the Nd:YAG laser.

It has thereby clearly be shown that the long wavelengths cited above in fact provide the best results. However as is well known a monochromator creates harmonics, positioned at wavelengths twice as long or only half as long. In order to further prove this, an optical filter allowing transmittance of radiation having half the wavelength as set forth and blocking the longer wavelength as set forth above made clear that the desired effect indeed disappeared.

As an advantageous effect of the present invention, exposure of CsBr:Eu-type phosphors having been exposed to X-rays, before starting readout by stimulating light in the range from 550 nm to 850 nm, with sources emitting infrared radiation in the range from 1000 nm to 1550 nm, and more particularly in the range from 1030 nm to 1130 nm, results in a remarkable decrease of thermally stimulated radiation emitted in form of undesired afterglow, and further advantageously results in a decrease of noise level of the detected and reproduced X-ray image and in a higher dynamic range of the resulting reproduced X-ray image.

## Claims

1. A method of reading a radiation image, stored in a CsBr:Eu type binderless needle-shaped photostimulable or storage phosphor screen after X-ray exposure of said screen, said method comprising the steps of:
(2) stimulating said phosphor screen by means of stimulating radiation in the range from 550 to 850 nm;
(3) detecting light emitted by the phosphor screen upon stimulation and converting the detected light into a signal representation of said radiation image;
(4) erasing said phosphor screen by exposing said screen to erasing light in the wavelength range from 300 nm to 1500 nm, **characterized in that** in a step (1) thermally stimulable energy is erased by exposing said screen to infrared radiation in the wavelength range from 1000 nm to 1550 nm.

2. Method according to claim 1, wherein the step of erasing thermally stimulable energy is performed by exposing said screen to infrared radiation is in the wavelength range of 1030 nm to 1130 nm.

3. Method according to claim 1, wherein the step of erasing thermally stimulable energy is performed by exposing said screen to infrared radiation by means of a Nd:YAG laser as a source of infrared radiation.

4. Method according to claim 1, wherein the step of erasing thermally stimulable energy is performed by exposing said screen to infrared radiation by means of a Nd:YLF laser as a source of infrared radiation.

5. Method according to claim 1, wherein the step of erasing thermally stimulable energy is performed by exposing said screen to infrared radiation by means of a tungsten lamp with an optical filter as a source of infrared radiation.

6. Method according to claim 1, wherein the step of erasing thermally stimulable energy is performed by exposing said screen to infrared radiation by means of an infrared LED as a source of infrared radiation.

7. Method according to claim 1, wherein the step of erasing thermally stimulable energy by exposing said screen to infrared radiation by means of a diode laser as a source of infrared radiation.

8. A method according to claim 1, wherein while erasing use is made of at least one laser.

9. A method according to claim 1, wherein while erasing use is made of one and the same laser for all of the erasing steps.

10. A method according to claim 9, wherein said laser is a tunable laser.

11. A method according to claim 9, wherein the main wavelength of the said laser is mixed with one or more harmonics thereof, obtained by frequency doubling.

12. A method according to any one of the claims 9 to 11, wherein, when use is made from said one and the same laser, use is made of a longer erasing wavelength in a first erasing step and a shorter erasing wavelength in a last erasing step.

13. A method according to claim 12, wherein while making use of said longer erasing wavelength in a first erasing step a filter is present in order to prevent transmission of said shorter erasing wavelength.

14. A method according to claim 12, wherein while making use of said shorter erasing wavelength in a last erasing step no filter is present.

15. A method according to claim 1, wherein the stimulating light source is a linear array of laser diodes.

16. A method according to claim 1, wherein as an array of transducer elements converting the said detected light emitted upon stimulation into an electrical signal representation is a linear array of charge coupled device elements.

17. Method according to any one of the claims 1 to 15, wherein said CsBr:Eu phosphor has been prepared by mixing CsBr as an alkali metal halide salt and wherein as a lanthanide dopant salt use has been made of EuX₂, EuX₃, EuOX or EuX_{z}, wherein 2 < z < 3 and wherein X is one of Br, Cl or a combination thereof.

18. Method according to any one of the claims 1 to 15, wherein said CsBr:Eu phosphor has been prepared by mixing CsBr as an alkali metal halide salt and wherein between 10⁻³ and 5 mol % of a Europium compound selected from the group consisting of EuX₂, EuX₃, EuOX, or EuX_{z}, wherein 2<z<3 and wherein X is one of Br, Cl or a combination thereof, firing the mixture at a temperature above 450°C, cooling said mixture, and recovering the CsX:Eu phosphor.

19. Method according to any one of the claims 1 to 15, wherein said CsBr:Eu phosphor has been prepared by mixing CsBr as an alkali metal halide salt and as a combination of an alkali metal halide salt and a lanthanide dopant salt, a salt according to the formula CsₓEu_{y}X'_{x+αy} , wherein x/y > 0.25, wherein α ≥ 2 and wherein X' is a halide selected from the group consisting of Cl, Br and I and combinations thereof.

20. Method according to any one of the claims 16 to 18, wherein said CsBr:Eu phosphor screen has been obtained by applying said phosphor on a substrate by a method selected from the group consisting of physical vapour deposition, thermal vapour deposition, chemical vapour deposition, radio frequency deposition and pulsed laser deposition. ■

## Patentansprüche

1. Verfahren zum Lesen eines Strahlungsbildes, das in einem bindemittelfreien nadelförmigen photostimulierbaren Schirm vom CsBr:Eu-Typ oder Speicher-Phosphor-Schirm nach Röntgenstrahlenexposition des Schirms gespeichert ist, wobei das Verfahren die Schritte umfasst:
(2) Stimulieren des Phosphorschirms mittels stimulierender Strahlung im Bereich von 550 bis 850 nm;
(3) Detektieren von Licht, ausgesendet vom Phosphorschirm nach Stimulation, und Umwandeln des detektierten Lichts zu einer Signaldarstellung des Strahlungsbildes;
(4) Löschen des Phosphorschirms, indem der Schirm löschendem Licht im Wellenlängenbereich von 300 nm bis 1500 nm ausgesetzt wird, **dadurch gekennzeichnet, dass** in einem Schritt (1) thermisch stimulierbare Energie gelöscht wird, indem der Schirm Infrarotstrahlung im Wellenlängenbereich von 1000 nm bis 1550 nm ausgesetzt wird.

2. Verfahren nach Anspruch 1, wobei der Schritt des Löschens thermisch stimulierbarer Energie durchgeführt wird, indem der Schirm Infrarotstrahlung im Wellenlängenbereich von 1030 nm bis 1130 nm ausgesetzt wird.

3. Verfahren nach Anspruch 1, wobei der Schritt des Löschens thermisch stimulierbarer Energie durchgeführt wird, indem der Schirm Infrarotstrahlung mittels eines Nd:YAG-Lasers als Quelle von Infrarotstrahlung ausgesetzt wird.

4. Verfahren nach Anspruch 1, wobei der Schritt des Löschens thermisch stimulierbarer Energie durchgeführt wird, indem der Schirm Infrarotstrahlung mittels eines Nd:YLF-Lasers als Quelle von Infrarotstrahlung ausgesetzt wird.

5. Verfahren nach Anspruch 1, wobei der Schritt des Löschens thermisch stimulierbarer Energie durchgeführt wird, indem der Schirm Infrarotstrahlung mittels einer Wolframlampe mit einem optischen Filter als Quelle von Infrarotstrahlung ausgesetzt wird.

6. Verfahren nach Anspruch 1, wobei der Schritt des Löschens thermisch stimulierbarer Energie durchgeführt wird, indem der Schirm Infrarotstrahlung mittels einer Infrarot-LED als Quelle von Infrarotstrahlung ausgesetzt wird.

7. Verfahren nach Anspruch 1, wobei der Schritt des Löschens thermisch stimulierbarer Energie durchgeführt wird, indem der Schirm Infrarotstrahlung eines Diodenlasers als Quelle von Infrarotstrahlung ausgesetzt wird.

8. Verfahren nach Anspruch 1, wobei während des Löschens zumindest ein Laser verwendet wird.

9. Verfahren nach Anspruch 1, wobei während des Löschens ein und derselbe Laser für alle Löschschritte verwendet wird.

10. Verfahren nach Anspruch 9, wobei der Laser ein abstimmbarer Laser ist.

11. Verfahren nach Anspruch 9, wobei die Hauptwellenlänge des Lasers mit einer oder mehreren ihrer durch Frequenzverdopplung erhaltenen Harmonischen gemischt wird.

12. Verfahren nach einem der Ansprüche 9 bis 11, wobei, bei Verwendung ein und desselben Lasers, eine längere Löschwellenlänge in einem ersten Löschschritt und eine kürzere Löschwellenlänge in einem letzten Löschschritt eingesetzt wird.

13. Verfahren nach Anspruch 12, wobei, während die längere Löschwellenlänge in einem ersten Löschschritt eingesetzt wird, ein Filter vorhanden ist, um eine Übertragung der kürzeren Löschwellenlänge zu verhindern.

14. Verfahren nach Anspruch 12, wobei, während die kürzere Löschwellenlänge in einem letzten Löschschritt eingesetzt wird, kein Filter vorhanden ist.

15. Verfahren nach Anspruch 1, wobei die stimulierende Lichtquelle eine Laserdiodenzeile ist.

16. Verfahren nach Anspruch 1, wobei eine Anordnung von Wandlerelementen, die das nach Stimulation ausgesendete, detektierte Licht zu einer elektrischen Signaldarstellung wandeln, eine zeilenförmige Anordnung ladungsgekoppelter Bauelemente ist.

17. Verfahren nach einem der Ansprüche 1 bis 15, wobei das CsBr:Eu-Phosphor hergestellt worden ist durch Mischen von CsBr als Alkalimetallhalidsalz und wobei EuX₂, EuX₃, EuOX oder EuX_{z} als Lanthanoiddotiersalz eingesetzt worden ist, wobei 2 < z < 3 und wobei X für eines von Br, Cl oder für eine Kombination daraus steht.

18. Verfahren nach einem der Ansprüche 1 bis 15, wobei das CsBr:Eu-Phosphor hergestellt worden ist durch Mischen von CsBr als Alkalimetallhalidsalz mit zwischen 10⁻³ und 5 Mol-% einer Europiumverbindung, ausgewählt aus einer Gruppe, die besteht aus EuX₂, EuX₃, EuOX oder EuX_{z}, wobei 2 < z < 3 und wobei X für eines von Br, Cl oder für eine Kombination daraus steht, Brennen des Gemischs bei einer Temperatur über 450 °C, Kühlen des Gemischs und Rückgewinnen des CsX:Eu-Phosphors.

19. Verfahren nach einem der Ansprüche 1 bis 15, wobei das CsBr:Eu-Phosphor hergestellt worden ist durch Mischen von CsBr als Alkalimetallhalidsalz und als Kombination aus einem Alkalimetallhalidsalz und einem Lanthanoiddotiersalz, einem Salz der Formel CsₓEu_{y}X'_{x+αy}, wobei x/y > 0,25, wobei α ≥ 2 und wobei X' für ein Halid steht, das aus jener Gruppe ausgewählt ist, die besteht aus Cl, Br und I sowie Kombinationen daraus.

20. Verfahren nach einem der Ansprüche 16 bis 18, wobei der CsBr:Eu-Phosphorschirm erhalten worden ist durch Aufbringen des Phosphors auf ein Substrat mittels eines Verfahrens, ausgewählt aus jener Gruppe, die besteht aus physikalischer Gasphasenabscheidung, thermischer Gasphasenabscheidung, chemischer Gasphasenabscheidung, Hochfrequenzverdampfen und Laserstrahlverdampfen.

## Revendications

1. Procédé de lecture d'une image radiographique, mémorisée dans un écran de stockage ou photostimulable au phosphore en forme d'aiguille sans liant de type CsBr:Eu après exposition aux rayons X dudit écran, ledit procédé comprenant les étapes consistant à :
(2) stimuler ledit écran au phosphore au moyen d'un rayonnement de stimulation situé dans la plage allant de 550 à 850 nm ;
(3) détecter la lumière émise par l'écran au phosphore lors de la stimulation et convertir la lumière détectée en une représentation par signal de ladite image radiographique ;
(4) effacer ledit écran au phosphore en exposant ledit écran à une lumière d'effacement située dans la plage des longueurs d'onde allant de 300 nm à 1500 nm,
**caractérisé en ce que,** dans une étape (1), l'énergie à stimulation thermique est effacée en exposant ledit écran à un rayonnement infrarouge situé dans la plage des longueurs d'onde allant de 1000 nm à 1550 nm.

2. Procédé selon la revendication 1, dans lequel l'étape d'effacement de l'énergie à stimulation thermique s'effectue en exposant ledit écran à un rayonnement infrarouge situé dans la plage des longueurs d'onde allant de 1030 nm à 1130 nm.

3. Procédé selon la revendication 1, dans lequel l'étape d'effacement de l'énergie à stimulation thermique s'effectue en exposant ledit écran à un rayonnement infrarouge en utilisant un laser Nd:YAG comme source de rayonnement infrarouge.

4. Procédé selon la revendication 1, dans lequel l'étape d'effacement de l'énergie à stimulation thermique s'effectue en exposant ledit écran à un rayonnement infrarouge en utilisant un laser Nd:YLF comme source de rayonnement infrarouge.

5. Procédé selon la revendication 1, dans lequel l'étape d'effacement de l'énergie à stimulation thermique s'effectue en exposant ledit écran à un rayonnement infrarouge en utilisant une lampe au tungstène munie d'un filtre optique comme source de rayonnement infrarouge.

6. Procédé selon la revendication 1, dans lequel l'étape d'effacement de l'énergie à stimulation thermique s'effectue en exposant ledit écran à un rayonnement infrarouge en utilisant une DEL infrarouge comme source de rayonnement infrarouge.

7. Procédé selon la revendication 1, dans lequel l'étape d'effacement de l'énergie à stimulation thermique s'effectue en exposant ledit écran à un rayonnement infrarouge en utilisant une diode laser comme source de rayonnement infrarouge.

8. Procédé selon la revendication 1, dans lequel l'effacement met en oeuvre un nombre d'au moins un laser.

9. Procédé selon la revendication 1, dans lequel l'effacement met en oeuvre un seul et unique laser au cours de toutes les étapes d'effacement.

10. Procédé selon la revendication 9, dans lequel ledit laser est un laser accordable.

11. Procédé selon la revendication 9, dans lequel la longueur d'onde principale dudit laser est mélangée à une ou plusieurs de ses harmoniques, résultant d'un doublage de fréquence.

12. Procédé selon l'une quelconque des revendications 9 à 11, dans lequel lors de l'utilisation dudit un seul et unique laser, on emploie une longueur d'onde d'effacement plus longue dans une première étape d'effacement et une longueur d'onde d'effacement plus courte dans une dernière étape d'effacement.

13. Procédé selon la revendication 12, dans lequel, lors de l'utilisation de ladite longueur d'onde d'effacement plus longue dans une première étape d'effacement, on emploie un filtre afin d'éviter la transmission de ladite longueur d'onde d'effacement plus courte.

14. Procédé selon la revendication 12, dans lequel on n'utilise aucun filtre lors de l'utilisation de ladite longueur d'onde d'effacement plus courte dans une dernière étape d'effacement.

15. Procédé selon la revendication 1, dans lequel la source de lumière de stimulation consiste en un réseau linéaire de diodes laser.

16. Procédé selon la revendication 1, dans lequel on utilise un réseau linéaire d'éléments de dispositif à couplage de charges comme réseau d'éléments transducteurs convertissant ladite lumière détectée, émise lors de la stimulation, en une représentation par signal électrique.

17. Procédé selon l'une quelconque des revendications 1 à 15, dans lequel ledit phosphore CsBr:Eu a été préparé en mélangeant du CsBr en tant que sel d'halogénure de métal alcalin, en utilisant comme sel dopant au lanthanide du EuX₂, EuX₃, EuOX ou EuXz, dans lequel 2 < z < 3 et dans lequel X représente Br ou Cl ou une combinaison de ceux-ci.

18. Procédé selon l'une quelconque des revendications 1 à 15, dans lequel ledit phosphore CsBr:Eu a été préparé en mélangeant du CsBr en tant que sel d'halogénure de métal alcalin, en utilisant entre 10⁻³ et 5 % en moles d'un composé d'Europium choisi dans le groupe constitué par EuX₂, EuX₃, EuOX, ou EuX_{z}, dans lequel 2 < z < 3 et dans lequel X représente Br ou Cl ou une combinaison de ceux-ci, en chauffant le mélange à une température supérieure à 450 °C, en refroidissant ledit mélange, et en récupérant le phosphore CsX:Eu.

19. Procédé selon l'une quelconque des revendications 1 à 15, dans lequel ledit phosphore CsBr:Eu a été préparé en mélangeant du CsBr en tant que sel d'halogénure de métal alcalin et, en tant que combinaison entre sel d'halogénure de métal alcalin et sel dopant au lanthanide, un sel correspondant à la formule CsₓEu_{y}X'_{x+ αy}, dans laquelle x/y > 0,25, α ≥ 2 et X' est un halogénure choisi dans le groupe constitué par CI, Br et I est des combinaisons de ceux-ci.

20. Procédé selon l'une quelconque des revendications 16 à 18, dans lequel ledit écran au phosphore CsBr:Eu a été obtenu en appliquant ledit phosphore sur un substrat suivant un procédé choisi dans le groupe constitué par le dépôt physique en phase vapeur, le dépôt en phase vapeur thermique, le dépôt en phase vapeur chimique, le dépôt par radiofréquences et le dépôt par laser pulsé.
